# EUROPEAN PATENT SPECIFICATION

(11) **EP 1 339 579 B1**
(45) Date of publication and mention of the grant of the patent: **16.02.2005**
(21) Application number: 01999497.9
(22) Date of filing: 07.12.2001
(51) Int. Cl.: B60T 8/32, B60T 7/04

(54) **BRAKE PRESSURE LIMITING**
BREMSDRUCKBEGRENZUNG
LIMITATION DE LA PRESSION DE FREINAGE

(30) Priority: 08.12.2000 GB 0030008
(43) Date of publication of application: 03.09.2003
(73) Proprietor: Delphi Technologies Inc., Troy, MI 48007 (US)
(72) Inventor: BAYLIS, Christopher Stanford, Northumberland, NE44 5LW (GB); HARRISON, Edmond John Wimbush, Leamington Spa, Warwickshire CV32 7DN (GB)
(74) Representative: Lamb, Richard Andrew
(86) International application number: PCT/GB2001/005415
(87) International publication number: WO 2002/046009

(56) References cited:
- EP-A- 1 038 742
- WO-A-01/38151
- WO-A-99/07587
- DE-A- 19 723 033
- GB-A- 2 345 107
- PATENT ABSTRACTS OF JAPAN vol. 1999, no. 02, 26 February 1999 (1999-02-26) & JP 10 310037 A (HONDA MOTOR CO LTD), 24 November 1998 (1998-11-24)

## Description

This invention relates to brake pressure limiting and provides a method and apparatus applicable thereto. More particularly, but not exclusively, the invention relates to limiting the forces and effects which can arise, undesirably, in the event of an automotive vehicle crash situation and/or which is preceded by emergency brake application.

The invention is applicable to automotive brake systems incorporating anti-lock braking systems (ABS).

In the case of automotive braking systems, whether including ABS or not, the occurrence of an emergency brake application can result in the generation within the hydraulic pressure generation system of hydraulic pressures which are, for example, seven or eight times greater than that which is strictly needed for full brake application. Much depends of course upon the physical strength of the driver and his or her reaction to the emergency situation. Of course if an ABS system is present then that system exerts its limiting effect upon the brake pressure actually applied to the wheel cylinders and it produces the well known pressure cycling effect (or some other effect dependent upon the characteristics of the ABS system). So far as the vehicle wheels are concerned, this limits the braking effect of the driver-generated actuation thrust and the result is (or should be) the avoidance of wheel locking, or at least the limitation thereof.

However, other effects of the generation of excessive hydraulic pressure in the system includes potential damage to hydraulic components themselves, including potential seizure of the master cylinder and related effects. Additionally, in the emergency braking situation, followed by impact, there is the physiological effect on the driver's brake control lower limb portions of the impact, for which it is relevant that the braking foot control pedal is at the moment of impact solidly connected to a hydraulic system in which all clearances have been taken up and thrust is transmittable through the incompressible medium of the hydraulic fluid. As a result, in such a situation, it is a commonly-occurring effect that following the inflation of the vehicle air bag in front of the driver there is the result that the drivers body tends to slither downwards (known as "submarining") between the airbag (with the steering wheel in front of it) and the seat, with the result that the driver's right ankle is driven downwards while the foot portion is articulated upwards and there is frequently occurring consequential lower limb joint damage which is often extremely difficult to repair by surgical procedures.

Thus, there is a need to provide effective means for responding to the requirements identified above in a manner which is able to accommodate the varying mechanical input force from automotive vehicle drivers in emergency braking situations while limiting the potential for damage to the hydraulic control system and/or its components, and which is adapted to enable the adoption of an anti-lock braking system (ABS) as an optional facility for automotive model differentiation while providing operational characteristics which allow the mechanical and/or hydraulic feedback from the ABS system (if not vented to tank) to be in someway offset so that the tendency for the vehicle driver to "submarine" between the seat and the airbag under crash conditions leads to less lower limb damage than has hitherto been the case. A further desirable feature of such a system is to.cooperate well with the varying hydraulic pressure input requirements of differing hydraulic brake systems including single disc and twin disc and other systems.

Examples of prior brake system proposals incorporating anti-lock brake systems are described in GB 2345107, WO 99/07587, and DE 19723033.

In particular in the arrangement of GB 2345107, which comprises the basis for the preamble fo claim 1, an impact sensor linked to the ABS control systems actuates an isolation valve. This isolation valve isolates the hydraulic braking circuit from reducing hydraulic pressure in the event of a crash and also divert pressure in the brake master cylinder to a drain to permit complete depression of the brake pedal increasing available space in the foot well.

Further background prior art identified in a search comprises:-
GB 23 47 388 A (Rover Group)
GB 23 22 836 A (Rover Group)
WO 99/59844 (Giat Industries)
US 58 48 662 (Toyota);
EP 1038742 (Teleflex), JP10310037(Honda);
WO 01/38151 (Draftex industries).

In the GB 388A reference there is disclosed a motor vehicle with deformable means between the brake pedal and the master cylinder. The brake pedal 13, 213 is substantially rigid but the mechanical linkage connecting it to the master cylinder 10 includes deformable means 16 arranged to collapse a pre-determined amount when a load above a pre-determined limit is applied.

The GB 836A reference discloses a vehicle braking system permitting collapse of the actuating pedal upon collision. The pedal is connected to means permitting the pedal to collapse against a controlled force in the event of a vehicle collision while maintaining a level of braking.

EP 742, JP 037, and WO 151 references describe similar arrangements.

The WO 844 and US references represent background art.

These all however relate to non ABS brake systems.

An object of the present invention is to provide a method and apparatus offering improvements in relation to one or more of the requirements identified above or improvements generally.

According to the invention there is provided a method and apparatus as defined in the accompanying claims.

In embodiments of the inventions, as described below, there are provided systems providing improvements in relation to several if not all of the requirements discussed above, as will be explained below.

Thus, in the embodiments of the invention described below there is provided a braking system in which a driver-operable brake foot pedal comprising resilient yield means is connected to a hydraulic master cylinder operating through an anti lock braking system (ABS) to actuate a braking system comprising twin disc disc brakes.

The system operates so that the ABS system provides pressure feedback to the master cylinder when functioning to limit wheel-locking, and the master cylinder produces some degree of mechanical feedback to the resilient means and the pedal. There is a threshold yield relationship between the resilient yield means and the ABS system together with the twin disc disc brakes, as will be discussed more fully below.

In the embodiments, the driver-operable brake foot pedal incorporates the resilient yield means in its structure so that a limit is placed upon the degree of mechanical force which can be transmitted to the master cylinder and thus via the ABS system to the brakes. The details of the mechanical construction of the pedal and its inter-relationship with the resilient means will be more fully described below in relation to the drawings. For the moment it suffices to say that the resilient yield means prevents an overload being applied to the master cylinder and thus the resilient yield means likewise applies a ceiling to the hydraulic pressure which can be generated by the master cylinder.

A significant aspect of the operational charateristics of the foot pedal described in relation to the embodiments below is the fact that the pedal itself incorporates, by virtue of its resilient yield means, a threshold value of its thrust-generating characteristics, and below this threshold or yield point the pedal functions substantially normally and as a simple mechanical structurally rigid pedal functions, so that the vehicle driver has no sense that the pedal incorporates any modification. Thus, under normal braking conditions, including braking at up to the operational limits of the vehicle's braking system under good high friction road operating characteristics, the pedal behaves completely normally.

The threshold value or yield point below which (in terms of applied thrust by the driver) the pedal behaves normally is related to the operating characteristics of the ABS system and the corresponding operating characteristics of the brakes themselves, whether of the single disc or twin disc kind. Twin disc brakes require significantly lower hydraulic operating pressure to achieve a given level frictional braking effect because the frictional surface area available for braking purposes is double or anyway significantly greater than that for a single disc disc brake.

Above the threshold value or yield point of the thrust generating characteristics of the driver-operable brake foot pedal, the resilient yield means comes into effect and allows the pedal, under the effect of the driver's foot loading, to yield so that (for example) if the driver tends to "submarine" between an inflated airbag and his seat, the foot-engagable portion of the pedal is able to yield under its loading instead of forcing the ball-end of the driver's brake-actuating foot in a generally upward direction relative to the heel portion of the foot. In one embodiment of the invention, the foot pedal incorporates a pivot which is able, at loads above the threshold value to permit the pedal to articulate to achieve this effect.

A significant aspect of the embodiments of the present invention relates to the yield point or threshold value of the pedal assembly as determined by the resilient yield means thereof. The threshold value is determined as a function of the braking system with which it cooperates, including the ABS system and including (taking account of) if. present the twin disc wheel brakes. As a result, the brake pedal has a functional integration with the system as a whole which is determined by its threshold yield value

It will be understood from the foregoing that the selection of the yield value for the brake pedal is a matter of design significance for the braking system as a whole and the value chosen should be significantly above the level of force needed from the pedal in order to achieve the maximum braking effect under conditions in which the highest brake pedal forces needed (eg emergency stopping under perfect road conditions).

Equally, the yield value for pedal needs to be significantly below the value at which the hydraulic forces from the pedal can cause damage to the braking system or to associated components.

In general terms, the yield point or threshold value at which the resilient yield means of the foot pedal comes into effect, thereby moving the pedal from its rigid phase (in which it responds as a normal rigid pedal) to its yield phase in which the pedal structure permits the resilient means to come into effect to provide the functions discussed above, will normally be arranged to be in accordance with the following.

Firstly, the yield point or threshold value will be at a level of pedal thrust which is at least 50% above the maximum load normally required to be transmitted by the pedal under maximum pedal load conditions. Such conditions will be conditions of perfect road adhesion in combination with less-than-perfect brake friction element condition. Typically, such condition will be with the friction elements in the state at which they would normally be recommended for service replacement.

Equally however since the level of pedal thrust at which damage or related undesirable consequences of overload occur is at a level of at least several times the maximum load (typically in the range of 4 to 8 times) and since the ABS system itself serves to control the level of retardation applied to the vehicle individual wheels for the minimising of skidding, the yield point can be provided at a significantly higher level than the above-mentioned maximum load plus 50%. Therefore for normal braking purposes it can be accepted as a parameter of the functionality of the resilient yield means that it causes the yield point or threshold value for the foot pedal to lie in the range of plus 50% to plus 400% with respect to the maximum load for the foot pedal in relation to the braking system under the maximum load conditions identified above. The preferred range usually extends from plus 100% to plus 300%. Of course these values are very substantially higher than those which would represent the maximum load under less favourable road conditions.

Embodiments of the invention will now be described by way of example with reference to the accompanying drawings in which:
Fig 1 shows in flow/block diagram format an embodiment of the invention comprising the major elements of an automotive braking system; and
Fig 2 shows a side elevation view of a driver-operable brake foot pedal forming part of the system of Fig 1; and
Fig 3 shows a graphic plot of output load against input load for the pedal of Fig 2.

As shown in the drawings, an automotive braking system 10 comprises vehicle wheel brakes 12 having friction elements actuated by hydraulic actuator cylinders as indicated at 14.

A hydraulic control system 16 for the brakes 12 comprises a driver-operable brake foot pedal 18 which is arranged to actuate a hydraulic master cylinder 20 which itself is connected to the actuator cylinders 14 for the wheel brakes 12. Braking system 10 further comprises a hydraulic control system comprising pressure limiting means 24, 26 adapted to limit the hydraulic pressure supplied to the hydraulic actuator cylinders 14 in accordance with defined operating parameters of the braking system 10.

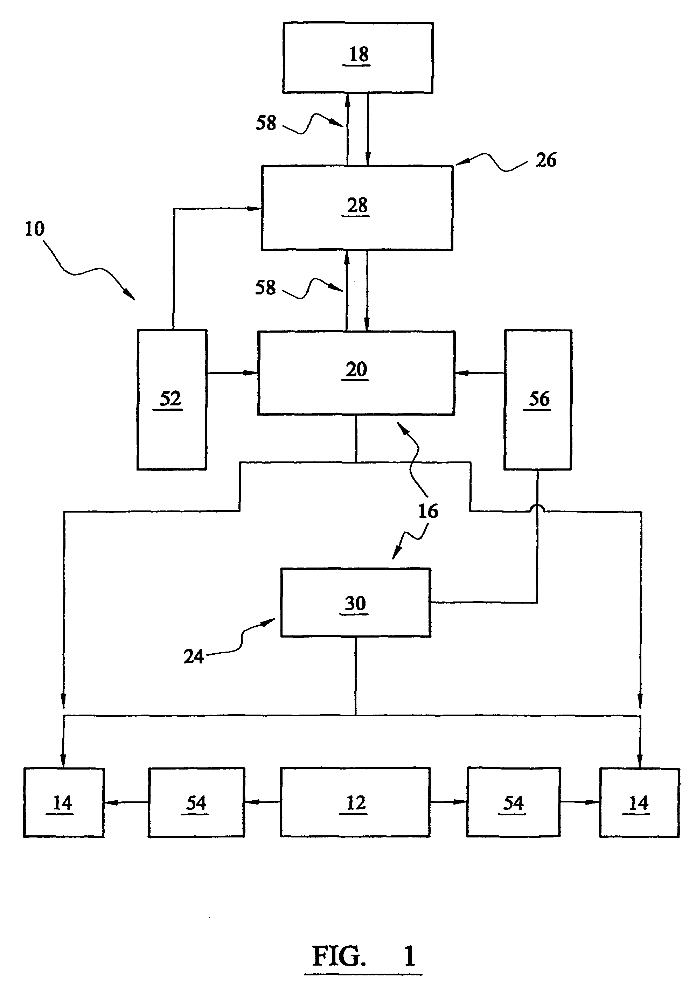

In this embodiment the pressure limiting means 24, 26 are embodied by resilient yield means 28 and the anti-skid braking system 30, respectively. This relationship is shown in Fig 1. Turning now to the structure and function and arrangement of the pressure limiting means, it first needs to be said that the anti-skid braking system or ABS can be of any suitable kind as currently supplied to production vehicles and therefore no further description of this aspect of the description will be provided.

Turning however to the pressure limiting means provided by the resilient yield means 28, this will now be considered in detail.

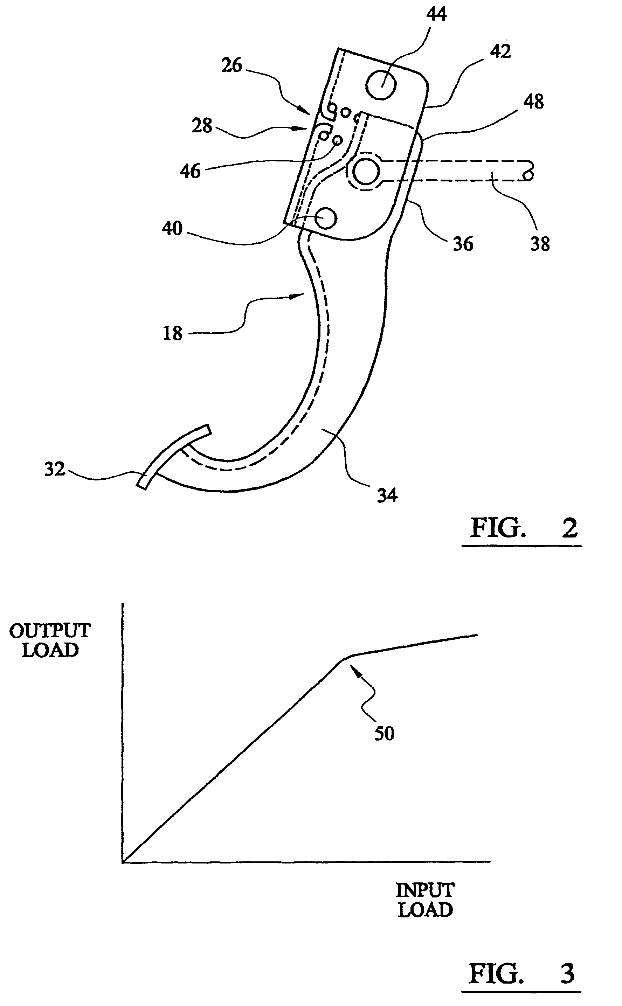

Thus, as indicated above and as illustrated in Fig 2, pressure limiting means 26 is provided by resilient yield means 28. For a better understanding of this relationship, we will now describe the structure and function of the foot pedal assembly 18 likewise seen in Fig 2.

Thus, foot pedal 18 comprises the usual slightly convex foot pad 32 mounted at the end of the pedal shank 34 which has as its upper end a mounting and control portion 36 to which is pivotally connected an output push rod 38 and which has a yield pivot 40 through which the pedal shank and mounting and control portion 36 are pivotally connected to a reference portion 42 having a primary pedal pivot 44 and a spring 46 (constituting resilient means) acting between the reference portion 42 and an upper end portion 48 of mounting and control portion 36 of pedal 18.

Spring 46, constituting resilient means acts between reference portion 42 of the pedal assembly and upper end portion 48 of the pedal shank. In this embodiment the spring is a coil compression spring having relatively stiff characteristics such that in relation to loads up to the yield point of the assembly (at which the spring commences to yield), the assembly of pedal shank 34 and reference portion 42 functions as a relatively rigid assembly pivoted at 44 and acting in the manner of a rigid pedal to cause the output push rod 38 to actuate the master cylinder 20.

When the yield point is reached, spring 46 permits relative articulation about yield pivot 40 between reference portion 42 and pedal shank 34 notably the upper end portion 48 thereof so that the pedal assembly articulates at yield pivot 40 with the result that further pedal effort from the driver does not markedly increase loading to the master cylinder nor the pressure produced thereby, and this is shown in Fig 3 which is a plot of output load against input load for the pedal assembly of Fig 2 and showing the yield point at 50.

In operation, the pedal assembly seen in Fig 2 is able to articulate in the manner described above when the load applied to the pedal by the driver exceeds that defined by the yield point. As a result, the pedal foot pad 32 no longer represents a fixed structure when the vehicle driver "submarines" on vehicle impact, so that the usual lower limb joint injuries which have become commonplace in such a situation are significantly reduced or eliminated. Likewise in the same situation the hydraulic pressure generated within the system no longer is caused to multiply by the factors discussed above in relation to prior systems so that damage to the hydraulic system is likewise reduced or illuminated. After the impact, the pedal assembly can return automatically to its normal configuration for further use and does so automatically under the loading applied by spring 46.

Amongst other modifications which could be made in the above described embodiments, are detailed design changes in the pedal assembly in relation to the articulatable structure and the interaction with same of the resilient means.

Turning now to the system as illustrated in Fig 1, further aspects of the operation of the system will now be considered.

Resilient yield means 28 in Fig 1 is provided by the spring 46 and associated structures of the foot pedal assembly 18. As shown at 52 in Fig 1, the resilient yield means is threshold-related (in terms of its yield point 50) to the master cylinder 20.

As discussed above, the yield point 50 is arranged to correspond to a pressure or pedal thrust level above that corresponding to the braking maximum load level for normal maximum retardation, and thus is significantly above the pressure levels at which the ABS system operates in all but good road conditions. It needs to be understood however that in the case of twin disc brake systems which operate at lower hydraulic pressures due to the greater friction element surface areas available, the threshold relationship with the resilient yield means is likely to be at correspondingly lower pressures accordingly. Also shown in Fig 1 at 56 is the pressure feedback from the ABS system to the master cylinder 20 and likewise at 58 the mechanical feedback between the master cylinder and the pedal assembly. It will now be understood that the pedal assembly by virtue of the resilient yield means is able to offset the effect both of the pressure feedback 56 and of the mechanical feedback 58 by virtue of its yielding action above the yield point 50. It will now be understood that the quantitative relationship between the yield point provided by the pedal assembly and the particular braking system adapted, for example the twin disc system 54, and with the interacting ABS system, enables the provision of an integrated braking system having significant advantages in relation to impact and anticipated impact situations which are relatively commonplace in day to day automotive use.

Instead of resilient yield means alternative yield means such as a shear pin could be employed.

## Claims

1. A method of controlling an automotive braking system (10) comprising:
a) providing vehicle wheel brakes (12) comprising friction elements actuated by hydraulic actuator cylinders (14);
b) providing a hydraulic control system (16) for said vehicle wheel brakes (12) comprising a driver-operable brake foot pedal (18) arranged to actuate a hydraulic master cylinder (20) connected to said actuator cylinders (14);
c) providing said hydraulic control system (16) with pressure limiting means (24) comprising an anti-skid braking system (30) adapted to limit the hydraulic pressure supplied to said hydraulic actuator cylinders (14) in accordance with defined operating parameters of said braking system (10); and
d) causing said anti-skid braking system (30) to limit said hydraulic pressure supplied to said hydraulic actuator cylinders (14);
**characterised by**:
e) providing further pressure limiting means (26) comprising yield means (28) associated with said foot pedal (18) and adapted to limit the mechanical load transmitted between the pedal (18) and said master cylinder (20) and the hydraulic input force applied to said anti-skid brake system (30) at loads above a yield point (50), while said yield means (28) permits said pedal (18) to operate as a substantially rigid structure at loads below said yield point (50);
f) said method causing said foot pedal yield means (28) to operate as a substantially rigid structure below said yield point (50) while limiting said mechanical load transmitted between the pedal (18) and said master cylinder (20) above said yield point; and
g) said yield point (50) lying in the range of 50% to 400% above the force needed from the pedal (18) in order to achieve the maximum braking effect under conditions in which the highest brake pedal (18) forces are needed.

2. A method according to claim 1 wherein the yield point (50) lies in the range of 100% above to 300% above the force needed from the pedal (18) in order to achieve the maximum braking effect under conditions in which the highest brake pedal (18) forces are needed.

3. A method according to claim 1 or 2 wherein the yield means (28) comprises resilient yield means.

4. A method according to any preceding claim wherein the foot pedal (18) comprises a pivotally (44) mounted reference portion (42) from which a control portion (36) operable by the vehicle driver is pivotally (40) mounted with the yield means (28, 46) acting between the reference and control portions (42,36); the method comprising causing the yield means (28,46) to allow articulation of the control portion (36) relative to the reference portion (42) when the load applied to the pedal (18) by the driver exceeds that defined by the yield point (50).

5. An automotive braking system (10) comprising:
a) vehicle wheel brakes (12) comprising friction elements actuated by hydraulic actuator cylinders (14);
b) a hydraulic control system (16) for said vehicle wheel brakes (12) comprising a driver-operable brake foot pedal (18) arranged to actuate a hydraulic master cylinder (20) connected to said actuator cylinders (14); and
c) said hydraulic control system (16) including pressure limiting means (24,26) comprising an anti- skid braking system (30) adapted to limit the hydraulic pressure supplied to said hydraulic actuator cylinders (14) in accordance with defined operating parameters of said braking system (10);
**characterised in that** the system (10) further comprises:
d) further pressure limiting means (26) comprising yield means (28) associated with said foot pedal (18) and adapted to limit the mechanical load transmitted between the pedal (18) and said master cylinder (20) and the hydraulic input force applied to said anti-skid brake system (30) at loads above a yield point (50), while said yield means (28) permits said pedal (18) to operate as a substantially rigid structure at loads below said yield point (50); and
e) said yield point (50) lying in the range of 50% to 400% above the force needed from the pedal (18) in order to achieve the maximum braking effect under conditions in which the highest brake pedal (18) forces are needed.

6. A braking system (10) according to claim 5 wherein the yield point (50) lies in the range of 100% above to 300% above the force needed from the pedal (18) in order to achieve the maximum braking effect under conditions in which the highest brake pedal (18) forces are needed.

7. A braking system (10) according to claim 5 or 6 wherein the yield means (28) comprises resilient yield means.

8. A braking system (10) according to any one of claims 5 to 7 wherein the foot pedal (18) comprises a pivotally (44) mounted reference portion (42) from which a control portion (36) operable by the vehicle driver is pivotally (40) mounted with the yield means (28) acting between the reference and control portions (42,36) which are adapted to allow articulation of the control portion (36) relative to the reference portion (42) only when the load applied to the pedal (18) by the driver exceeds that defined by the yield point (50).

9. A braking system (10) according to claim 8 wherein the yield means (28) comprises a spring (46) acting between the reference and control portions (42,36).

10. A braking system (10) according to claim 8 wherein the yield means (28) comprises a shear pin acting between the reference and control portions (42,36).

## Patentansprüche

1. Verfahren zum Steuern eines Fahrzeugbremssystems (10), umfassend:
a) Bereitstellen von Fahrzeugradbremsen (12), die durch hydraulische Betätigerzylinder (14) betätigte Reibungselemente umfassen;
b) Bereitstellen eines hydraulischen Steuersystems (16) für die Fahrzeugradbremsen (12), das ein vom Fahrer zu betätigendes Fußbremspedal (18) umfasst, das so angeordnet ist, das es einen hydraulischen Hauptzylinder (20) betätigt, der mit den Betätigerzylindern (14) verbunden ist;
c) Versehen des hydraulischen Steuersystems (16) mit Druckbegrenzungsmitteln (24), die ein Antiblockiersystem (30) umfassen, das ausgebildet ist, den hydraulischen Druck, der den hydraulischen Betätigerzylindern (14) zugeführt wird, gemäß definierten Betriebsparametern des Bremssystems (10) zu begrenzen, und
d) Bewirken, dass das Antiblockiersystem (30) den hydraulischen Druck begrenzt, der den hydraulischen Zylindern (14) zugeführt wird;
**dadurch gekennzeichnet, dass**:
e) weitere Druckbegrenzungsmittel (26) bereitgestellt werden, die ein Nachgabemittel (28) umfassen, das mit dem Fußpedal (18) verbunden und ausgebildet ist, die mechanische Last, die zwischen dem Pedal (18) und dem Hauptzylinder (20) übertragen wird, und die hydraulische Eingangskraft, die auf das Antiblockiersystem (30) bei über einer Quetschgrenze (50) liegenden Lasten ausgeübt wird, zu begrenzen, während das Nachgabemittel (28) es dem Pedal (18) ermöglicht, bei unter der Quetschgrenze (50) liegenden Lasten als eine im Wesentlichen starre Struktur zu arbeiten;
f) das Verfahren das Fußpedal-Nachgabemittel (28) veranlasst, unterhalb der Quetschgrenze (50) als eine im Wesentlichen starre Struktur zu arbeiten, während es über der Quetschgrenze die mechanische Last begrenzt, die zwischen dem Pedal (18) und dem Hauptzylinder (20) übertragen wird.
g) die Quetschgrenze (50) in dem Bereich von 50% bis 400% über der von dem Pedal (18) benötigten Kraft liegt, um die optimale Bremswirkung unter Bedingungen zu erzielen, unter denen die höchsten Kräfte des Bremspedals (18) benötigt werden.

2. Verfahren nach Anspruch 1, bei dem die Quetschgrenze (50) in dem Bereich von 100% bis 300% über der von dem Pedal (18) benötigten Kraft liegt, um die optimale Bremswirkung unter Bedingungen zu erzielen, unter denen die höchsten Kräfte des Bremspedals (18) benötigt werden.

3. Verfahren nach Anspruch 1 oder 2, bei dem das Nachgabemittel (28) elastische Nachgabemittel umfasst.

4. Verfahren nach einem der vorhergehenden Ansprüche, bei dem das Fußpedal (18) einen drehbar (44) montierten Referenzabschnitt (42) umfasst, an dem ein vom Fahrer betätigbarer Steuerabschnitt (36) drehbar (40) montiert ist, wobei die Nachgabemittel (28, 46) zwischen dem Referenz- und dem Steuerabschnitt (42, 36) wirken; wobei das Verfahren vorsieht, die Nachgabemittel (28, 46) zu veranlassen, eine Gelenkverbindung des Steuerabschnitts (36) relativ zu dem Referenzabschnitt (42) zu ermöglichen, wenn die durch den Fahrer auf das Pedal (18) ausgeübte Last diejenige übersteigt, die durch die Quetschgrenze (50) festgelegt ist.

5. Fahrzeugbremssystem (10), umfassend:
a) Fahrzeugradbremsen (12), die durch hydraulische Betätigerzylinder (14) betätigte Reibungselemente umfassen;
b) ein hydraulisches Steuersystem (16) für die Fahrzeugradbremsen (12), das ein vom Fahrer zu betätigendes Bremsfußpedal (18) umfasst, das so angeordnet ist, das es einen hydraulischen Hauptzylinder (20) betätigt, der mit den Betätigerzylindern (14) verbunden ist;
c) das hydraulische Steuersystem (16), das Druckbegrenzungsmittel (24, 26) enthält, die ein Antiblockiersystem (30) umfassen, das ausgebildet ist, den hydraulischen Druck, der den hydraulischen Betätigerzylindern (14) zugeführt wird, gemäß definierten Betriebsparametern des Bremssystems (10) zu begrenzen;
**dadurch gekennzeichnet, dass** das System (10) ferner umfasst:
d) weitere Druckbegrenzungsmittel (26), die ein Nachgabemittel (28) umfassen, das mit dem Fußpedal (18) verbunden und ausgebildet ist, die mechanische Last, die zwischen dem Pedal (18) und dem Hauptzylinder (20) übertragen wird, und die hydraulische Eingangskraft, die auf das Antiblockiersystem (30) bei über einer Quetschgrenze (50) liegenden Lasten ausgeübt wird, zu begrenzen, während das Nachgabemittel (28) es dem Pedal (18) ermöglicht, bei unter der Quetschgrenze (50) liegenden Lasten als eine im Wesentlichen starre Struktur zu arbeiten; und
e) dass die Quetschgrenze (50) in dem Bereich von 50% bis 400% über der von dem Pedal (18) benötigten Kraft liegt, um die optimale Bremswirkung unter Bedingungen zu erzielen, unter denen die höchsten Kräfte des Bremspedals (18) benötigt werden.

6. Bremssystem (10) nach Anspruch 5, bei dem die Quetschgrenze (50) in dem Bereich von 100% bis 300% über der von dem Pedal (18) benötigten Kraft liegt, um die optimale Bremswirkung unter Bedingungen zu erzielen, unter denen die höchsten Kräfte des Bremspedals (18) benötigt werden.

7. Bremssystem (10) nach Anspruch 5 oder 6, bei dem das Nachgabemittel (28) elastische Nachgabemittel umfasst.

8. Bremssystem (10) nach einem der Ansprüche 5 bis 7, bei dem das Fußpedal (18) einen drehbar (44) montierten Referenzabschnitt (42) umfasst, an dem ein vom Fahrer betätigbarer Steuerabschnitt (36) drehbar (40) montiert ist, wobei die Nachgabemittel (28) zwischen dem Referenz- und dem Steuerabschnitt (42, 36) wirken, die ausgebildet sind, eine Gelenkverbindung des Steuerabschnitts (36) relativ zu dem Referenzabschnitt (42) nur dann zu ermöglichen, wenn die durch den Fahrer auf das Pedal (18) ausgeübte Last diejenige übersteigt, die durch die Quetschgrenze (50) festgelegt ist.

9. Bremssystem (10) nach Anspruch 8, bei dem das Nachgabemittel (28) eine Feder (46) umfasst, die zwischen dem Referenz- und dem Steuerabschnitt (42, 36) wirkt.

10. Bremssystem (10) nach Anspruch 8, bei dem das Nachgabemittel (28) einen Scherstift umfasst, der zwischen dem Referenz- und dem Steuerabschnitt (42, 36) wirkt.

## Revendications

1. Procédé de commande d'un dispositif de freinage automobile (10) comprenant :
a) l'agencement de freins de roue de véhicule (12) comprenant des éléments de frottement activés par des vérins d'activation hydrauliques (14) ;
b) l'agencement d'un dispositif de commande hydraulique (16) desdits freins de roue de véhicule (12) comprenant une pédale de freinage au pied pouvant être commandée par le conducteur (18), agencée afin d'activer un maître-cylindre hydraulique (20) couplé auxdits vérins d'actionneur (14) ;
c) l'agencement sur ledit dispositif de commande hydraulique (16) de moyens de limitation de pression (24) comprenant un dispositif de freinage anti-patinage (30) adaptés de manière à limiter la pression hydraulique délivrée auxdits vérins d'actionneur hydraulique (14) en fonction de paramètres opérationnels définis dudit dispositif de freinage (10) ; et
d) la limitation, par ledit dispositif de freinage anti-patinage (30), de ladite pression hydraulique délivrée auxdits vérins d'actionneur hydrauliques (14) ;
**caractérisé par** :
e) l'agencement d'autres moyens de limitation de pression (26), comprenant un moyen d'écrêtage de chargement (28) associé à ladite pédale de pied (18) et adapté afin de limiter la charge mécanique transmise entre la pédale (18) et ledit maître-cylindre (20) et l'effort d'entrée hydraulique appliqué sur ledit dispositif de freinage anti-patinage (30) pour des charges supérieures à un point de réduction de chargement (50), ledit moyen d'écrêtage de chargement (28) permet le fonctionnement de ladite pédale (18) comme une structure sensiblement rigide à des charges inférieures audit point de réduction de chargement (50) ;
f) ledit procédé provoquant le fonctionnement dudit moyen d'écrêtage de chargement de pédale de pied (28) comme une structure sensiblement rigide au-dessous dudit point de réduction de chargement (50) tout en limitant ladite charge mécanique transmise entre la pédale (18) et ledit maître-cylindre (20) au-dessus dudit point de réduction de chargement ; et
g) ledit point de réduction de chargement (50) étant situé dans la plage de 50% à 400% au-dessus de l'effort nécessaire, à partir de la pédale (18), dans le but d'obtenir l'effet de freinage maximum sous des conditions dans lesquelles les efforts de pédale de frein (18) les plus élevés sont nécessaires.

2. Procédé selon la revendication 1, dans lequel ledit point de réduction de chargement (50) est situé dans la plage de 100 % au-dessus à 300 % au-dessus de l'effort nécessaire à partir de la pédale (18) dans le but d'obtenir l'effet de freinage maximum sous des conditions dans lesquelles les efforts les plus élevés sur la pédale de frein (18) sont nécessaires.

3. Procédé selon la revendication 1 ou 2, dans lequel le moyen d'écrêtage de chargement (28) comprend un moyen d'écrêtage de chargement élastique.

4. Procédé selon l'une quelconque des revendications précédentes, dans lequel la pédale de pied (18) comprend une partie de référence (42) montée de manière à pouvoir pivoter (44) à partir de laquelle une partie de commande (36) pouvant être commandée par le conducteur de véhicule est montée de manière à pouvoir pivoter (40), le moyen d'écrêtage de chargement (28, 46) agissant entre les parties de référence et de commande (42, 36) ; le procédé comprenant l'autorisation, par le moyen d'écrêtage de chargement (28, 46), de l'articulation de la partie de commande (36) par rapport à la partie de référence (42) lorsque la charge appliquée sur la pédale (18) par le conducteur excède celle définie par le point de réduction de chargement (50).

5. Dispositif de freinage automobile (10) comprenant :
a) des freins de roue de véhicule (12) comprenant des éléments de frottement activés par des vérins d'actionneur hydraulique (14) ;
b) un dispositif de commande hydraulique (16) desdits freins de roue de véhicule (12) comprenant une pédale de freinage au pied pouvant être commandée par le conducteur (18) agencée de manière à activer un maître-cylindre hydraulique (20) couplé auxdits vérins d'actionneur (14) ; et
c) ledit dispositif de commande hydraulique (16) comportant un moyen de limitation de pression (24, 26) comprenant un dispositif de freinage anti-patinage (30) adapté afin de limiter la pression hydraulique délivrée auxdits vérins d'activation hydraulique (14) en fonction de paramètres opérationnels définis dudit dispositif de freinage (10) ;
**caractérisé en ce que** le dispositif (10) comporte, en outre :
d) d'autres moyens de limitation de pression (26) comprenant des moyens de chargement (28) associés à ladite pédale de pied (18) et adaptés afin de limiter la charge mécanique transmise entre la pédale (18) et ledit maître-cylindre (20) et l'effort d'entrée hydraulique appliqué sur ledit dispositif de freinage anti-patinage (30) à des charges supérieures au point de réduction de chargement (50), alors que ledit moyen d'écrêtage de chargement (28) permet le fonctionnement de la pédale (18) comme une structure sensiblement rigide à des charges inférieures audit point de réduction de chargement (50) ; et
e) ledit point de réduction de chargement (50) étant situé dans la plage de 50% à 400% au-dessus de l'effort nécessaire, à partir de la pédale (18), dans le but d'obtenir l'effet de freinage maximum sous des conditions dans lesquelles les efforts de pédale de frein (18) les plus élevées sont nécessaires.

6. Dispositif de freinage (10) selon la revendication 5, dans lequel le point de réduction de chargement (50) est situé dans la plage de 100 % au-dessus à 300 % au-dessus de l'effort nécessaire, à partir de la pédale (18), dans le but d'obtenir l'effet de freinage maximum sous des conditions dans lesquelles les efforts de pédale de frein (18) les plus élevés sont nécessaires.

7. Dispositif de freinage (10) selon la revendication 5 ou 6, dans lequel le moyen d'écrêtage de chargement (28) comprend un moyen d'écrêtage de chargement élastique.

8. Dispositif de freinage (10) selon l'une quelconque des revendications 5 à 7, dans lequel la pédale de pied (18) comprend une partie de référence (42) montée de manière à pouvoir pivoter (44) à partir de laquelle une partie de commande (36) pouvant être commandée par le conducteur de véhicule est montée de manière à pouvoir pivoter (40), ledit moyen d'écrêtage de chargement (28) agissant entre les parties de référence et de commande (42, 36) qui sont adaptées de manière à permettre l'articulation de la partie de commande (36) par rapport à la partie de référence (42) seulement lorsque la charge appliquée sur la pédale (18) par le conducteur excède celle définie par le point de réduction de chargement (50).

9. Dispositif de freinage (10) selon la revendication 8, dans lequel le moyen d'écrêtage de chargement (28) comprend un ressort (46) agissant entre les parties de référence et de commande (42, 36).

10. Dispositif de freinage (10) selon la revendication 8, dans lequel le moyen d'écrêtage de chargement (28) comprend une broche de cisaillement agissant entre les parties de référence et de commande (42, 36).
